# EUROPEAN PATENT APPLICATION

(11) **EP 1 962 191 A2**
(43) Date of publication of application: **27.08.2008**
(21) Application number: 08151129.7
(22) Date of filing: 06.02.2008
(51) Int. Cl.: G06F 9/48, G06F 3/06

(54) **Improvements in and relating to I/O Request Package handling**

(30) Priority: 13.02.2007 GB 0702746
(71) Applicant: Appsense Holdings Ltd, Warrington Cheshire WA4 4BU (GB)
(72) Inventor: Hill, Rowland, Warrington, Cheshire WA4 4BU (GB)
(74) Representative: Brandon, Paul Laurence

(57) **Abstract**

An apparatus for handling IRPs, the apparatus comprising an overload determining unit (36) configured to determine whether a device for which an IRP is intended is overloaded, a penalty determining unit (56) configured to determine the penalty for the IRP and a penalty applying unit (50) configured to apply the penalty to the IRP.

## Description

### Field of the Invention

The present invention relates to apparatus and methods for handling Input/Output Request Packets (IRPs) and to computer readable media carrying computer programs for implementing such methods.

### Background to the Invention

A computer program or application running on a computer is enabled by a process which, typically, includes a plurality of threads. These processes running on a computer have a requirement to read/write to or from a fixed disk, a storage medium or a network device, referred to generically as an input/output (I/O) device. The operating system creates an I/O Request Package (IRP) for each threads storage/retrieval request which is passed through the driver stack to be processed by the I/O device.

Many computing situations can require storage read/write operations to be performed at a level greater than the I/O device can support. This is especially true when the operating system allows multiple processes or applications to run in parallel. When the number or volume of IRPs is greater than the number or volume of IRPs an I/O device can process the I/O device is said to be overloaded and IRPs are queued to be processed.

Each application, process or even individual thread can monopolise the I/O device such that other threads, processes or applications can exhibit disk I/O resource contention. The IRPs created from the different applications, processes or threads can be seen as being at the back of a long queue of requests for the I/O device to process and may be seen to the user/user interface or computing device as hung or inoperable.

Preferred embodiments of the present invention aim to obviate or overcome a problem with the prior art, whether such problem or prior art is disclosed herein or otherwise.

### Summary of the Invention

According to the present invention in a first aspect, there is provided an apparatus for handling IRPs, the apparatus comprising an overload determining unit configured to determine whether a device for which an IRP is intended is overloaded, a penalty determining unit configured to determine the penalty for the IRP and a penalty applying unit configured to apply the penalty to the IRP.

Suitably, the device is an I/O device.

Suitably, the overload determining unit samples the IRPs and the completed IRPs over a sampling period and if the number of IRPs exceeds the number of completed IRPs for a device then the I/O device is determined to be overloaded.

Suitably, the penalty is a time delay. Suitably, the time delay is from 0 milliseconds to 50 milliseconds, preferably 0 milliseconds to 20 milliseconds. Suitably, the IRPs are delayed in the driver stack.
Suitably, the penalty determining unit further comprises an exemption checking unit configured to determine if an application that spawned the IRP is exempt from a penalty.

Suitably, the penalty determining unit comprises a priority determining unit, configured to determine whether an IRP under consideration is the highest priority IRP of the currently active IRPs for the I/O device and if so applying a lesser penalty to the IRP than would otherwise be the case. Suitably, the lesser penalty is not to apply a penalty.

Suitably, the penalty determining unit further comprises a penalty removal determining unit configured to determine whether the I/O device would be overloaded if penalties were removed and a penalty removing unit configured to remove penalties if the penalty removal determining unit determines that the I/O device would not be overloaded if the penalties were to be removed.

Suitably, the penalty determining unit further comprises a last sample penalty checking unit and a penalty adding unit, which last sample penalty checking unit is configured to determine whether in the last sampling period the application associated with the IRP under consideration was penalised and, if it was, the penalty adding unit is configured to increase the allotted penalty for the application. Suitably, the penalty determining unit further comprises a penalty decreasing unit configured to decrease the allotted penalty on other applications if it is determined that in the last sampling period the application associated with the IRP under consideration was penalised.

Suitably, the penalty determining unit further comprises a last sample penalty checking unit and a penalty adding unit, which last sample penalty checking unit is configured to determine whether in the last sampling period the application associated with the IRP under consideration was penalised and, if it was not, the penalty adding unit is configured to increase the penalty delay on the other applications.

Suitably, the apparatus further comprises a penalty applying unit configured to apply a penalty to an IRP.

Suitably, the apparatus further comprises a penalty monitoring unit configured to determine if a penalty has expired and an IRP transmittal unit configured to transmit an IRP.

According to the present invention in a second aspect, there is provided a method for handling IRPs, the method comprising the steps of determining whether a device for which an IRP is intended is overloaded, determining the penalty for the IRP and applying the penalty to the IRP.

Suitably, the device is an I/O device.

Suitably, method samples the IRPs and the completed IRPs over a sampling period and if the number of IRPs exceeds the number of completed IRPs for a device then the I/O device is determined to be overloaded.

Suitably, the penalty is a time delay. Suitably, the time delay is from 0 to 100 milliseconds. Suitably, the time delay is from 0 milliseconds to 20 milliseconds. Suitably, the IRPs are delayed in a driver stack.

Suitably, the method comprises the step of determining if an application that spawned the IRP is exempt from a penalty.

Suitably, the method comprises the step of determining whether an IRP under consideration is the highest priority IRP of the currently active IRPs for the I/O device and if so applying a lesser penalty to the IRP than would otherwise be the case. Suitably, the lesser penalty is not to apply a penalty.

Suitably, the method comprises the step of determining whether the I/O device would be overloaded if penalties were removed and removing penalties if it is determined that the I/O device would not be overloaded if the penalties were to be removed.

Suitably, method comprises the step of determining whether in the last sampling period the application associated with the IRP under consideration was penalised and, if it was, to increase the allotted penalty for the application. Suitably, the method comprises the step of decreasing the allotted penalty on other applications if it is determined that in the last sampling period the application associated with the IRP under consideration was penalised.

Suitably, the method comprises the step of determining whether in the last sampling period the application associated with the IRP under consideration was penalised and, if it was not, to increase the penalty delay on the other applications.

Suitably, method comprises the step of applying a penalty to an IRP.

Suitably, method comprises the step of determining if a penalty has expired and an IRP transmittal unit configured to transmit an IRP.

According to the present invention in a third aspect, there is provided a computer-readable media carrying a computer program for implementing the method of the second aspect of the invention.

### Brief Description of the Drawings

For a better understanding of the invention, and to show how embodiments of the same may be carried into effect, reference will now be made, by way of example, to the accompanying diagrammatic drawings in which:
Figure 1 is a schematic functional illustration of the configuration of a computer according to the present invention.
Figure 2 is a schematic functional illustration of an apparatus for controlling requests to an I/O device according to the present invention.
Figure 3 is a functional flow diagram illustrating the operation of an embodiment of the present invention.

### Description of the Preferred Embodiments

The aspects and features of the present invention are described hereinafter with reference to flowchart illustrations of user interfaces, methods, and computer program products according to exemplary embodiments of the present invention. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks.

These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks.

The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

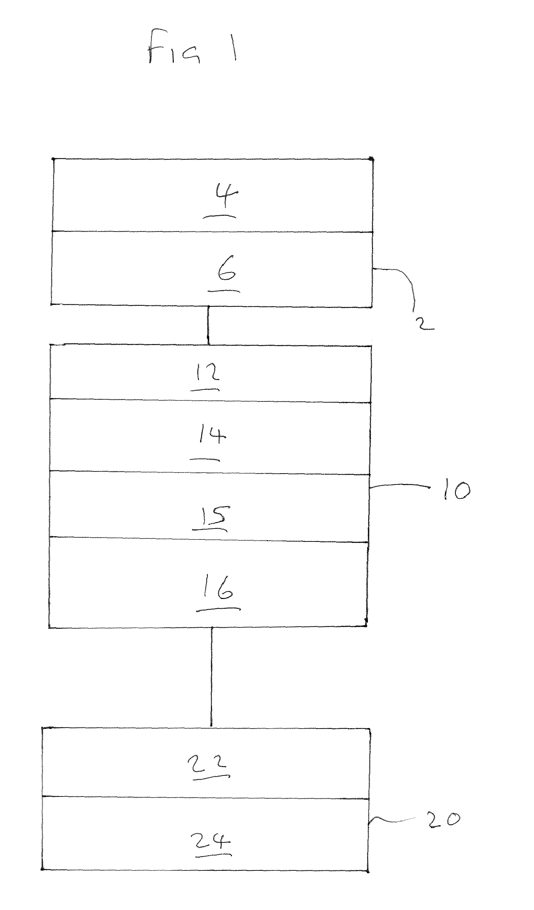

Referring to Figure 1 of the accompanying drawings, there is shown a schematic functional illustration of a computer apparatus according to the present invention. The apparatus comprises a user space 2, made up of a user interface 4 and a user program 6, a kernel 10 made up of the remainder of the operating system 12, a File System Filter Driver (FSFD) 14, an I/O manager 15 and a conventional I/O device driver 16. Then there is hardware 20, here in particular an I/O device controller 22 and an I/O device 24.

Examples of I/O devices 24 for use with the present invention include CD-ROMs, hard disk drive, floppy disk drives, flash memories, printers, cameras, Network interface, etc and includes such devices if they are networked as well.

In this embodiment of the present invention, the FSFD 14 is added above the conventional I/O device driver 16. The FSFD 14 is an independent, loadable kernel driver through which file system I/O request packets (IRPs) are passed. Each IRP corresponds to a request to perform a specific file system operation, such as open, close, IOcontrol, delete, read or write on a specified file on disk or other I/O device. By intercepting the request before it reaches the intended target, the FSFD 14 can extend or replace functionality provided by the original target of the request.

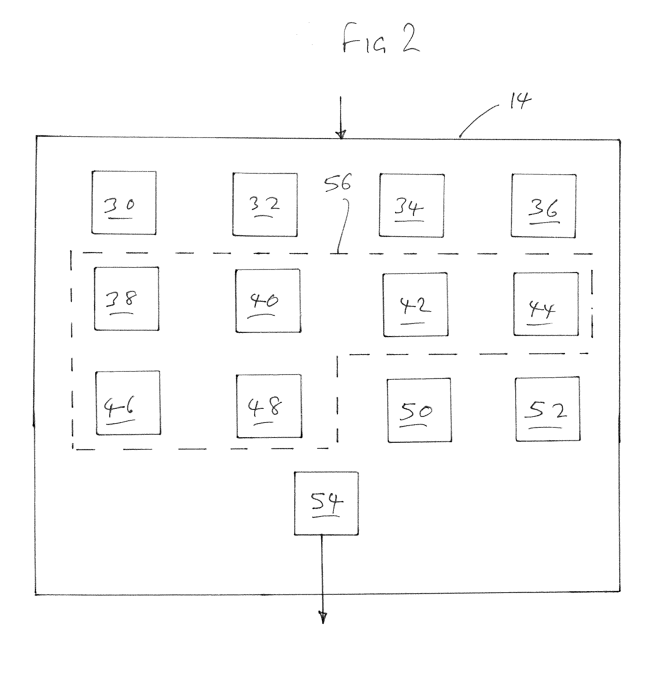

Referring to Figure 2 of the accompanying drawings there is shown a schematic functional representation of the FSFD 14. In this embodiment of the present invention, the FSFD 14 acts as an apparatus to control requests to an I/O device.

The FSFD 14 comprises an IRP receiving unit 30, an exemption checker 32, a memory 34, an overload determining unit 36, a priority determining unit 38, a penalty removal determining unit 40, a penalty removal unit 42, a last sample penalty checking unit 44, a penalty adding unit 46, a penalty decreasing unit 48, a penalty applying unit 50, penalty monitoring unit 52 and an IRP transmittal unit 54. Together the priority determining unit 38, penalty removal determining unit 40, penalty removal unit 42, last sample penalty checking unit 44, penalty adding unit 46, penalty decreasing unit 48 and penalty applying unit 50 make up a penalty determining unit 56.

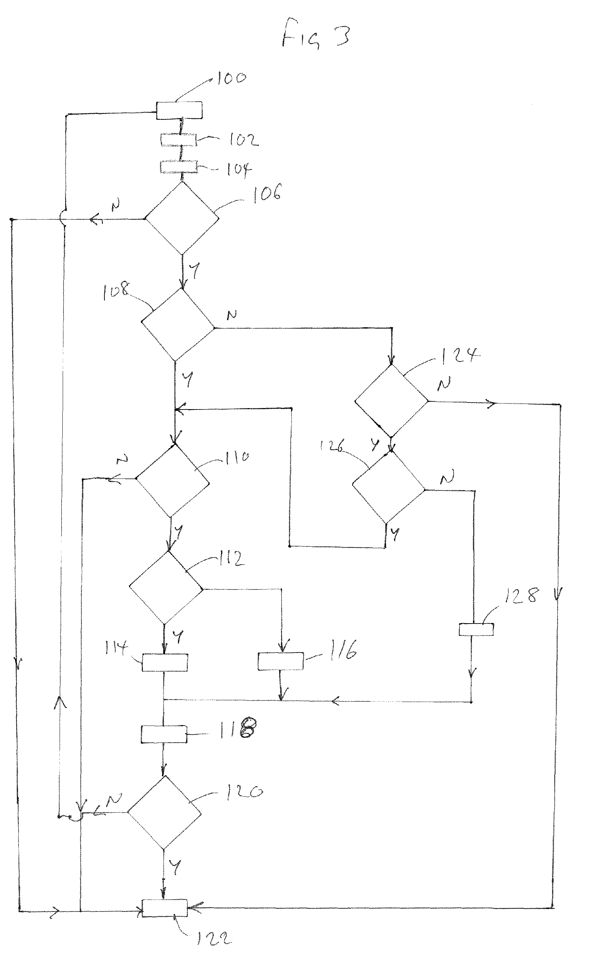

The use of this embodiment of the present invention as shown in Figure 2 is illustrated in the accompanying Figure 3, which is a functional flow diagram.

In step 100 an application requests a read or write operation from an I/O device. In step 102 an IRP is created by the I/O manager 15. The IRP includes as a field an identifier of the process it has been spawned from.

In step 104 FSFD 14 receives the IRP.

Next (step 106) the exemption checking unit 32 compares the process with an exemption list stored in memory 34. If the specified process is stored in the exemption list, it is exempted from being held up by the FSFD 14 and passed straight through to the IRP transmission unit 50. If it is not in the exemption list, the method proceeds to the next step along the "no" branch.

In step 108, the overload determining unit 36 determines whether there is any overload on the I/O device 24. The overload determining unit 36 monitors the IRP requests that have passed down the driver stack against the number of completed I/O operations and so determines periodically whether there is a queue, i.e. an overload. The sampling period varies depending on the type of the device that the IRP handling unit is layered over. A typical sampling period is 1 second.

In the priority determining unit 38 when there is an overload determined by overload determining unit 36 the IRPs are checked (step 110) against a priority list in memory 34. The priority list is a list of applications each having a rating, such as shown in Table 1 below with 0 being the highest priority rating and 10 the lowest.

**Table 1**

| **Application** | **Rating** | **Delay** |
|---|---|---|
| SQL Server | 0 | 0 milliseconds |
| Microsoft Word | 3 | 10 milliseconds |
| Microsoft Outlook | 2 | 5 milliseconds |
| Microsoft Excel | 3 | 10 milliseconds |
| Adobe Acrobat | 6 | 20 milliseconds |
| Default | 10 | 30 milliseconds |

Default is the option for applications for which a rating is not otherwise given. The rating given to an application can be user defined, the user in this case usually being a system administrator.

The "Delay" column in Table 1 above is the delay that normally is applied to an IRP from that application, though this can be dynamically modified as set out below.

To simplify implementation of the present invention, an application that is not to be penalised can be given a delay of 0 microseconds as shown in Table 1 above.

The IRP includes an identifier of the application with which it is associated (or it can be so associated by virtue of the identified process of the IRP). An application is not penalised if it is the highest priority application of those in the FSFD 14 and in the I/O device 24. These are referred to as active IRPs for this device 24. Thus if an IRP from Adobe Acrobat (rating 6) and an IRP from Microsoft Excel (rating 3) are queued at the I/O device 24, then if an IRP from SQL Server (rating 0) is considered by the FSFD 14 it would not be delayed as it is the highest priority, whereas if an IRP from Microsoft PowerPoint (default as not listed, so rating 10) is considered by the FSFD 14 it would be penalised as there are higher priority applications queued.

If it is determined that the IRP should be delayed, then at step 112 it is determined by last sample penalty checking unit 44 whether the application was penalised in the last sampling period. If it was, then at step 114 the penalty delay on that application is increased by penalty adding unit 46 and the penalty delay on other applications is decreased by penalty decreasing unit 48. This alters the "Delay" figures given in Table 1 above on a dynamic basis.

If the application was not penalised in the last sampling period, then in step 116 the penalty delays on other applications are decreased by penalty decreasing unit 48. It is noted however that unless the "Delay" as shown in Table 1 above is set to zero by a user, no modified delay can reach zero. This is because otherwise all (or at least many) applications would tend towards a zero delay. Once an application is allocated a zero delay it would never again be delayed. A nominal minimum delay is 5 milliseconds. The initial delay can be increased or decreased depending on what is occurring, then applied if necessary. The delay is reset to its initial value when appropriate. Note that there may be no delay applied depending on the circumstances.

In step 118 the penalty is applied to the IRP under consideration by penalty applying unit 50. That is the IRP is delayed within the driver stack for the "Delay" period of Table 1 as modified by steps 114, 116 described above.

In step 120 it is determined by penalty monitoring unit 52 whether any delayed IRPs have reached the end of their delay period. If they have they are released to a lower driver in step 122 by IRP transmittal unit 54. If no IRPs have at this point in time cleared their delay penalty, then the method loops back to step 100 to await the next IRP. It should be noted that as the method proceeds, if there is no delayed IRP then the no branch is followed from step 110 ("Should IRP be Penalised?").

Referring back to step 108 ("Is disk overloaded?"), if the answer is "no" then in step 124 it is determined by penalty monitoring unit 52 whether any IRPs are currently being penalised, i.e. held up in the FSFD. If no IRPs are being penalised then the arriving IRP is simply passed down the driver stack at step 122 by IRP transmittal unit 54.

However, if at step 108 there is no overload, it is determined whether IRPs are currently being penalised (step 124) and if so a determination is made at step 126 whether the disk would be overloaded if penalties were removed by penalty removal determining unit 40. Due to the nature of the disk and multithreading, overload at the next sampling period can not be predicted beforehand when IRPs are released at the current sampling point, so penalties are just decreased and IRPs released appropriately. Overload is checked again at the next sampling period, and the appropriate action taken. If the answer is "yes" then the method proceeds to step 110 ("Should IRP be penalised?"). If the answer is "no" then at step 128 penalties are removed by penalty removal unit 42 and the request is sent to the lower driver (step 122) by IRP transmittal unit 54.

It will be appreciated that many alterations can be made to the described embodiment within the scope of the present invention. For instance the features of the exemption checking, priority determination and dynamic penalty delays need not be present in a simplified version of the invention. These features can be included independently of each other.

Other options include carrying out the exemption check in other ways, such as on a "by user" basis in a networked environment.

The invention can also be embodied as computer readable codes on a computer readable recording medium. The computer readable recording medium is any data storage device that can store data which can be thereafter read by a computer system that includes an apparatus having a function of information processing. Examples of the computer readable recording medium include a read-only memory (ROM), a random-access memory (RAM), a CD-ROM, a magnetic tape, a floppy disk, an optical data storage device, and the like.

Thus preferred embodiments of the present invention provide an apparatus and method that will avoid any one application from monopolising I/O device resource. IRP requests can be held up in the driver stack. Applications can be prioritised to customise I/O device access.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus for handling IRPs, the apparatus comprising an overload determining unit configured to determine whether a device for which an IRP is intended is overloaded, a penalty determining unit configured to determine the penalty for the IRP and a penalty applying unit configured to apply the penalty to the IRP.

2. An apparatus for handling IRPs as claimed in claim 1, wherein the device is an I/O device.

3. An apparatus for handling IRPs as claimed in claim 1 or claim 2, wherein the overload determining unit samples the IRPs and the completed IRPs over a sampling period and if the number of IRPs exceeds the number of completed IRPs for a device then the I/O device is determined to be overloaded.

4. An apparatus for handling IRPs as claimed in any preceding claim, wherein the penalty is a time delay.

5. An apparatus for handling IRPs as claimed in claim 4, wherein the IRPs are delayed in the driver stack.

6. An apparatus for handling IRPs as claimed in any preceding claim, wherein the penalty determining unit further comprises an exemption checking unit configured to determine if an application that spawned the IRP is exempt from a penalty.

7. An apparatus for handling IRPs as claimed in any preceding claim, wherein the penalty determining unit comprises a priority determining unit, configured to determine whether an IRP under consideration is the highest priority IRP of the currently active IRPs for the I/O device and if so applying a lesser penalty to the IRP than would otherwise be the case.

8. An apparatus for handling IRPs as claimed in claim 7, wherein the lesser penalty is not to apply a penalty.

9. An apparatus for handling IRPs as claimed in any preceding claim, wherein the penalty determining unit further comprises a penalty removal determining unit configured to determine whether the I/O device would be overloaded if penalties were removed and a penalty removing unit configured to remove penalties if the penalty removal determining unit determines that the I/O device would not be overloaded if the penalties were to be removed.

10. An apparatus for handling IRPs as claimed in any preceding claim, wherein the penalty determining unit further comprises a last sample penalty checking unit and a penalty adding unit, which last sample penalty checking unit is configured to determine whether in the last sampling period the application associated with the IRP under consideration was penalised and, if it was, the penalty adding unit is configured to increase the allotted penalty for the application.

11. An apparatus for handling IRPs as claimed in claim 10, wherein the penalty determining unit further comprises a penalty decreasing unit configured to decrease the allotted penalty on other applications if it is determined that in the last sampling period the application associated with the IRP under consideration was penalised.

12. An apparatus for handling IRPs as claimed in any preceding claim, wherein the penalty determining unit further comprises a last sample penalty checking unit and a penalty adding unit, which last sample penalty checking unit is configured to determine whether in the last sampling period the application associated with the IRP under consideration was penalised and, if it was not, the penalty adding unit is configured to increase the penalty delay on the other applications.

13. An apparatus for handling IRPs as claimed in any preceding claim, the apparatus further comprises a penalty applying unit configured to apply a penalty to an IRP.

14. An apparatus for handling IRPs as claimed in any preceding claim, wherein the apparatus further comprises a penalty monitoring unit configured to determine if a penalty has expired and an IRP transmittal unit configured to transmit an IRP.

15. A method for handling IRPs, the method comprising the steps of determining whether a device for which an IRP is intended is overloaded, determining the penalty for the IRP and applying the penalty to the IRP.

16. A computer-readable media carrying a computer program for implementing the method of claim 15.
